# EUROPÄISCHE PATENTANMELDUNG

(11) **EP 1 658 920 A2**
(43) Veröffentlichungstag der Anmeldung: **24.05.2006**
(21) Anmeldenummer: 05025437.4
(22) Anmeldetag: 22.11.2005
(51) Int. Cl.: B23K 11/30

(54) **Verfahren und Bearbeitungsvorrichtung zur Formgebung und/oder zum mechanischen Entfernen von Ablagerungen an Schweißelektroden**

(30) Priorität: 22.11.2004 DE 102004056228
(71) Anmelder: WEDO Werkzeugbau GmbH, 59439 Holzwickede (DE); Thyssen Duro Metall GmbH, 70806 Kornwestheim (DE)
(72) Erfinder: Koch Walter, 59439 Holzwickede (DE); Leiteritz Olaf, 52399 Merzenich (DE)
(74) Vertreter: Schneider, Uwe

(57) **Zusammenfassung**

Die Erfindung betrifft ein Verfahren zur Formgebung und/oder zum mechanischen Entfernen von Ablagerungen an Schweißelektroden (2) für das Widerstandsschweißen, wobei die Schweißelektroden (2) im wesentlichen scheibenförmig mit am Scheibenumfang ausgebildeten, im wesentlichen radial abstehenden Schweißelementen (3) ausgebildet sind und zwei derartige scheibenförmige Schweißelektroden (2) einander gegenüberliegend und die zu verschweißenden Bauteile zumindest abschnittsweise zwischen sich aufnehmend mit den Schweißelementen (3) die zu verschweißenden Bauteile gegeneinander pressen, elektrisch kontaktieren und verschweißen. Hierfür werden die einander gegenüberliegenden Kontaktflächen (4) der Schweißelemente (3) in einer Bearbeitungsvorrichtung (1) definiert voneinander beabstandet an mindestens einem Positionierungselement (7) positioniert und durch eine Vorschubbewegung (9) an mindestens einem eine oder gleichzeitig beide Kontaktflächen (4) reinigenden und/oder formgebenden Bearbeitungswerkzeug (8) vorbeigeführt werden. Ebenfalls wird eine entsprechende Bearbeitungsvorrichtung (1) mit einem Positionierelement (7) vorgesehen.

## Beschreibung

Die Erfindung betrifft ein Verfahren zur Formgebung und/oder zum mechanischen Entfernen von Ablagerungen an Schweißelektroden für das Widerstandsschweißen gemäß Oberbegriff des Anspruches 1 sowie eine hierfür geeignete Bearbeitungsvorrichtung gemäß Oberbegriff des Anspruches 13.

Widerstandsschweißungen werden in einer Vielzahl von Anwendungen im Bereich der Fertigungstechnik eingesetzt und dienen üblicherweise dazu, dünnwandige Metallteile oder dergleichen wie etwa Blechteile miteinander zu verbinden. Hierfür werden von Hand oder etwa auch von mechanisierten oder automatisierten Einrichtungen wie beispielsweise Schweißrobotern entsprechende Schweißzangen an die Verbindungsstellen der Werkstücke heran gebracht und dort so miteinander auf Kontakt gefahren, daß die Werkstücke zu mindestens punktförmig aufeinander liegen. Durch den über die Schweißzangen auf die Werkstücke aufgebrachte Schweißstrom wird das Material des Werkstückes punktuell sehr stark erhitzt und verschweißt bleibend miteinander.

Durch das Schweißverfahren kommt es unweigerlich dazu, daß die Schweißzangen im Bereich der Berührung mit den Werkstücken im Laufe der Zeit eine Veränderung erfahren, und zwar eine Veränderung sowohl der Form als auch der Materialeigenschaften. Üblicherweise werden für derartige Schweißzangen im Bereich der Berührung mit dem Werkstück Materialien aus Kupfer und Kupferlegierungen benutzt, die beim Schweißen einem sogenannten Abbrand, also einer Abtragung von Material der Schweißzangen im Bereich der Berührung mit dem Werkstück unterliegen. Ebenfalls werden die Oberflächen der Schweißzangen im Bereich der Berührung mit dem Werkstück sich dadurch verändern, daß Material aus den Werkstücken oder durch die Verschweißung entstehender Rückstände wie etwa Schlacken oder dergleichen sich dort anlagern und auch dadurch die Geometrie der entsprechenden Oberflächen der Schweißzangen verändern. Derartige Ablagerungen, die beim Schweißen entstehen und sich an der Schweißelektrode vornehmlich im Berührungsbereich ablagern, müssen aber periodisch entfernt werden. Denn für die Erzielung qualitativ hochwertiger Schweißpunkte ist es wichtig, daß die Schweißelektroden besonders in ihrem Kontaktbereich, der mit dem zu schweißenden Werkstück in Berührung kommt, plan oder definiert geformt sind.

Hinsichtlich der Gestaltung von Schweißelektroden war es lange Zeit vorherrschend, die Schweißelektroden aus einem sich verbrauchenden Bestandteil, der Schweißkappe, und einem länger nutzbaren Teil auszubilden, auf den die jeweiligen Schweißkappen aufgesetzt werden. Derartige Kappen sind häufig näpfchenartige Hohlteile, die über einen entsprechenden Konus auf den Träger der Schweißzangen aufgesetzt werden und somit fest mit der Schweißzange, gleichzeitig aber lösbar verbunden sind. Das Wechseln der Kappen ist ein relativ aufwendiger Vorgang, der darüber hinaus mit einer beträchtlichen Stillstandszeit der Schweißanlage einher geht und daher nur dann vorgenommen werden soll, wenn die Kappe nicht mehr innerhalb des zulässigen Toleranzbereichs liegt. Zur Vermeidung dieser übermäßigen Stillstandszeiten ist es bekannt, die Kappen statt sie auszuwechseln einer formgebenden Bearbeitung zu unterziehen, bei der die den Werkstücken nahen Bereiche der Kappe ähnlich wie bei einem Anspitzer eines Bleistiftes spanend nachbearbeitet werden und daher nach dieser Bearbeitung wieder die geforderten Toleranzen hinsichtlich der Form und der Oberfläche einhalten. Dieses Nachbearbeiten der Kappen erfolgt üblicherweise mit spanenden Werkzeugen, die durch eine Relativbewegung zwischen der Kappe und dem Werkzeug genau wie beim Anspitzer eines Bleistiftes die Oberfläche der Kappe definiert abtragen und dabei Verunreinigungen beseitigen sowie die Ausgangsgeometrie der Kappe in dem Bereich der Schweißpunkte wieder herstellen.

Das Nachbearbeiten der Kappen erfolgt in Bearbeitungsstationen, die im Arbeitsbereich der Schweißroboter angeordnet sind und die durch die Schweißzangen des Schweißroboters in vorgebbaren Abständen angefahren werden. Die Schweißzangen mit den daran angeordneten Kappen fahren in diese Bearbeitungsstation ein und die Schweißzangen drücken eine oder beide Kappen gegen die Fräsköpfe in der Bearbeitungsstation, die sich angetrieben von elektrischen oder pneumatischen Antrieben mit einer vorgebbaren Drehzahl drehen. Dieses Andrücken der Kappen gegen die Fräsköpfe muß aufgrund technologischer Vorgaben während einer sehr genau einzuhaltenden Zeit und mit einem entsprechenden Anpreßdruck erfolgen, damit die Bearbeitung der Kappen bestimmungsgemäß ausgeführt wird.

Derartige weit verbreitete Punktschweißzangen haben den Nachteil, daß eine kantennahe Bearbeitung aufgrund der Abmessungen der Schweißzangen nicht immer wie eigentlich erforderlich möglich ist. Es sind daher Entwicklungen bekannt geworden, mit denen die Geometrie der Schweißzangen verändert wird, um diese Probleme zu lösen.

Von der Fa. Nothelfer ist ein unter der Bezeichnung Max-Weld beworbenes System von Schweißzangen bekannt geworden, bei dem die Schweißelektroden aus im wesentlichen scheibenförmig mit am Scheibenumfang ausgebildeten, im wesentlichen radial abstehenden Schweißelementen bestehen und zwei derartige scheibenförmige Schweißelektroden einander gegenüberliegend und die zu verschweißenden Bauteile zumindest abschnittsweise zwischen sich aufnehmend mit den Schweißelementen die zu verschweißenden Bauteile gegeneinander pressen, elektrisch kontaktieren und verschweißen. Hierdurch bildet sich einen andere Geometrie der Schweißpunkte derart verschweißter Materialien, auch können die Schweißpunkte wesentlich näher an den Kanten zu verschweißender Werkstücke, z.B. auch im Bereich von Wandungen oder dgl. gesetzt werden. Die Schweißelemente liegen hierbei im wesentlich mittels ebener Flächen an den zu verschweißenden Werkstücken an, wobei diese ebenen Flächen im wesentlichen tangential an den Umfang der scheibenförmigen Schweißelektroden verlaufen. Auch diese Kontaktflächen unterliegen, da sie aus entsprechend leitfähigen Materialien wie Kupferlegierungen oder dgl. gebildet sind, ähnlich wie die üblichen Schweißkappen einem Verschleiß und es bilden sich ebenfalls Ablagerungen aufgrund des Schweißprozesses an ihnen. Daher müssen auch diese Schweißelemente nachgearbeitet werden, soll die einwandfreie Geometrie der Schweißelektroden dieses Systems gewährleistet werden.

Es ist daher Aufgabe der vorliegenden Erfindung, ein Verfahren und eine Vorrichtung vorzuschlagen, bei dem ähnlich wie bei üblichen Schweißkappensystemen eine Reinigung und/oder Formgebung auch derart geformter Schweißelektroden auf einfache und sichere Weise gewährleistet werden kann.

Die Lösung der erfindungsgemäßen Aufgabe ergibt sich hinsichtlich des Verfahrens aus den kennzeichnenden Merkmalen des Anspruches 1 und hinsichtlich der Vorrichtung aus den kennzeichnenden Merkmalen des Anspruches 13 in Zusammenwirken mit den Merkmalen des jeweiligen Oberbegriffes. Weitere vorteilhafte Ausgestaltungen der Erfindung ergeben sich aus den Unteransprüchen.

Die Erfindung geht aus von einem Verfahren zur Formgebung und/oder zum mechanischen Entfernen von Ablagerungen an Schweißelektroden für das Widerstandsschweißen, wobei die Schweißelektroden im wesentlichen scheibenförmig mit am Scheibenumfang ausgebildeten, im wesentlichen radial abstehenden Schweißelementen ausgebildet sind und zwei derartige scheibenförmige Schweißelektroden einander gegenüberliegend und die zu verschweißenden Bauteile zumindest abschnittsweise zwischen sich aufnehmend mit den Schweißelementen die zu verschweißenden Bauteile gegeneinander pressen, elektrisch kontaktieren und verschweißen. Ein derartiges gattungsgemäßes Verfahren wird dadurch weiter gebildet, daß die einander gegenüberliegenden Kontaktflächen der Schweißelemente in einer Bearbeitungsvorrichtung definiert voneinander beabstandet an mindestens einem Positionierungselement positioniert werden und durch eine Vorschubbewegung an mindestens einem eine oder gleichzeitig beide Kontaktflächen reinigenden und/oder formgebenden Bearbeitungswerkzeug vorbeigeführt werden. Für die Bearbeitung der üblicherweise ebenen und planparallel zueinander ausgeführten Kontaktflächen derartiger Schweißelemente ist es von zentraler Bedeutung, daß die Kontaktflächen der Schweißelemente genau bezogen auf das Bearbeitung des Werkzeug positioniert werden, um die gewünschte Abtragung der Oberfläche der Kontaktflächen bzw. die Formgebung der Kontaktflächen zu gewährleisten. Hierbei muß weiter beachtet werden, daß die Abtragung möglichst gering sein soll, um einen vorzeitigen Verschleiß der Schweißelektroden aufgrund zu häufiger oder zu umfangreicher Abtragungen zu vermeiden. Die Schweißelektroden der hier zugrundeliegenden Bauart werden üblicherweise in zangenartigen Gestellen befestigt, mit denen die Schweißelektroden an den jeweiligen Schweißpunkt herangeführt und dann beispielsweise durch separate Antriebe in Form pneumatischer Antriebe oder dergleichen gegeneinander gedrückt werden. Die zu verschweißenden Werkstücke werden hierbei zwischen den Schweißelektroden geklemmt, elektrisch kontaktieren und verschweißt. Somit kann dieser zusätzliche Antrieb der Schweißelektroden dazu genutzt werden, um die Kontaktflächen der Schweißelektroden für die Abtragung der Kontaktflächen relativ zu dem Bearbeitungswerkzeug einfach zu positionieren, wobei durch die Anlage der einen oder der beiden Kontaktflächen an dem Positionierungselement eine genaue Positionierung der Kontaktflächen relativ zu dem Bearbeitungswerkzeug erzielt werden kann. Hierbei ist es auch unerheblich, ob die Halterung der Schweißelektroden selbst genau positioniert wird, da bis zu einem gewissen Grad durch die Beweglichkeit der Schweißelektroden relativ zu der Halterung ein entsprechender Ausgleich möglicherweise auftretender Handhabungsgenauigkeiten etwa eines Industrieroboters oder dergleichen erfolgt. Wird nun eine derart positionierte Kontaktfläche durch eine Vorschubbewegung, die in der einfachsten Ausgestaltung eine lineare Relativbewegung zwischen Kontaktfläche und Bearbeitungsvorrichtung sein kann, die Kontaktfläche an dem Bearbeitungswerkzeug entlanggeführt, so kann das Bearbeitungswerkzeug sehr genau und gezielt dosiert die Abtragung bzw. Formgebung der Kontaktfläche bewirken. Auch kann dieser Prozeß der Abtragung bzw. Formgebung sehr schnell ausgeführt werden, um die Einsatzzeit der Schweißeinrichtung nicht zu stark zu reduzieren. Damit ist eine einfache Möglichkeit geschaffen, die hier zur Rede stehenden Schweißelektroden nach einer entsprechenden Anzahl von Bearbeitungen wieder genau den geometrischen Kontaktverhältnissen anzupassen, die als Vorgabewert für die Ausführung einer Punktschweißung gefordert werden.

Von Vorteil für die Durchführung des erfindungsgemäßen Verfahrens ist es hierbei, wenn in weiterer Ausgestaltung die Bearbeitungsvorrichtung die notwendigen Bewegungen und Bearbeitungen zur Reinigung und/oder Formgebung der einander gegenüberliegenden Kontaktflächen der Schweißelemente bei im wesentlichen ortsfest angeordneten Schweißelektroden vornimmt. Hierdurch ist zum einen gewährleistet, daß etwa ein die Schweißelektroden bewegender Industrieroboter keine zu hohen Genauigkeiten bei der Ausführung entsprechender Bearbeitungen der Kontaktflächen aufweisen muß und zum anderen durch entsprechende Antriebe und Führungen die Durchführung der benötigten Bearbeitungsbewegungen schnell und unkompliziert erfolgen kann. Damit wird aber die Stillstandszeit einer entsprechenden Schweißeinrichtung deutlich reduziert, weiterhin kann die Reinigung der Kontaktflächen in entsprechender Ausgestaltung als zusätzliche Baueinheit in der Nähe der Schweißeinrichtung aufgebaut und gezielt etwa von einem etwa die Schweißelektroden bewegenden Industrieroboter angefahren werden.

Wichtig ist es in weiterer Ausgestaltung, daß das Positionierungselement derart zu einem reinigenden und/oder formgebenden Bearbeitungswerkzeug positioniert wird, daß eine Relativbewegung der Schweißelemente zu dem Positionierungselement eine Reinigung und/oder Formgebung der Oberfläche der Kontaktflächen durch das Bearbeitungswerkzeug hervorruft. Abhängig von der Verkrustung bzw. Formänderung der Kontaktflächen bezogen auf einen Sollwert kann dabei das Positionierungselement jeweils neue oder auch automatisch bezogen auf das Bearbeitungswerkzeug derart positioniert werden, daß aufgrund der sich daraus ergebenden Bearbeitung der Kontaktflächen einerseits eine sichere Reinigung bzw. Formgebung der Kontaktflächen erfolgt, andererseits nicht zu viel Abtrag von den Kontaktflächen mit sich daraus ergebender längerer Lebensdauer der Schweißelektroden ergibt. So ist es beispielsweise denkbar, daß nach einer Messung der notwendigen Abtragung jedes einzelnen Schweißelementes eine erneute Einstellung der relativen Position von Positionierungselement und Bearbeitungswerkzeug erfolgt, selbstverständlich ist es auch denkbar, daß anhand entsprechender Erfahrungswerte eine für eine Anzahl von Bearbeitung geltende Einstellung gewählt wird.

In einer ersten Ausgestaltung des erfindungsgemäßen Verfahrens ist es denkbar, daß die Vorrichtung eine lineare Hinbewegung und eine lineare Rückbewegung ausführt, so daß das Bearbeitungswerkzeug jede Kontaktfläche zweimal bearbeitet und die Kontaktflächen bei der jeweils zweiten Bewegung zusätzlich verbessert, insbesondere zusätzlich glättet. Häufig ist es gerade bei etwa zerspanenden Bearbeitungen mittels Fräser nicht ausreichend, nur einmal mit dem Fräser über die zu bearbeitende Fläche zu fahren, da dann aufgrund beispielsweise oberflächennah vorhandener harter Stellen eine ungleichmäßige Zerspanung der Kontaktfläche und damit eine nicht glatt ausgeführte Kontaktfläche entsteht. Auch ist abhängig vom Drehsinn des Werkzeuges bezogen auf die Vorschubrichtung des Werkzeuges beim Gleichlauffräsen bzw. beim Gegenlauffräsen eine unterschiedliche Ausbildung der Oberfläche der Kontaktflächen erzielbar, die dadurch kompensiert werden kann, daß einmal im Gegenlauf und einmal im Gleichlauf über die Fläche gegangen wird und dadurch die bei ungünstigen Zerspanungsverhältnissen auftretenden Rattermarken wieder beseitigt werden.

Hinsichtlich der möglichst langen Ausnutzung der Schweißelektroden ist es von Vorteil, wenn die räumliche Zuordnung zwischen Positionierelement und Bearbeitungswerkzeug und damit der Abtrag der Kontaktfläche verändert wird, insbesondere an den Grad des Vorhandenseins von Ablagerungen oder Formänderungen angepaßt wird. Hierdurch kann durch gezielte Erfassung der notwendigen Abtragung der Kontaktflächen dafür gesorgt werden, daß nur genau die Menge des Materials der Kontaktflächen entfernt wird, die zu einer Herstellung der Sollwerte der Form und der Oberfläche der Kontaktflächen notwendig ist. Hierbei kann in weiterer Ausgestaltung die räumliche Zuordnung zwischen Positionierelement und Bearbeitungswerkzeug automatisiert an den Grad des Vorhandenseins von Ablagerungen oder Formänderungen angepaßt werden. Beispielsweise kann die Schweißelektrode vor dem Bearbeiten durch das Bearbeitungswerkzeug in einer Meßstation oder von einer Meßeinrichtung untersucht werden, welche Abtragung notwendig ist. Eine entsprechende Verstellung der räumlichen Zuordnung zwischen Positionierelement und Bearbeitungswerkzeug kann dann automatisiert erfolgen und direkt gesteuert werden.

In einer anderen Ausgestaltung des erfindungsgemäßen Verfahrens ist es denkbar, daß die beiden Kontaktflächen der einander gegenüberliegenden Schweißelemente getrennt voneinander in einer Anzahl einzelner Vorschubbewegungen nacheinander gereinigt werden. Hierdurch ist es möglich, jeweils nur eine der beiden Kontaktflächen zu bearbeiten und dabei die optimalen Bearbeitungsverhältnisse beispielsweise hinsichtlich der Zerspanung durch einen Fräser oder dergleichen einzustellen. So kann beispielsweise direkt immer in dem günstigsten der beiden Verfahren Gleichlauffräsen bzw. Gegenlauffräsen gearbeitet werden, wodurch eine zweite Bearbeitung der gleichen Kontaktfläche vermieden werden kann. Hierfür sind dann unter Umständen zusätzlich Positionierbewegungen oder Stellbewegungen auszuführen, um die jeweilige Kontaktfläche relativ zu dem Bearbeitungswerkzeug zu positionieren und anzustellen. Hierdurch kann nur je eine Kontaktfläche an dem Bearbeitungswerkzeug gleichzeitig die Bearbeitung ausführend vorbei bewegt werden, so daß die andere Kontaktfläche, ggf. nach Ausführung weiterer Positionierbewegungen relativ zu dem Bearbeitungswerkzeug, in einem weiteren Bearbeitungsgang gereinigt werden kann. Denkbar ist es auch, daß die räumliche Zuordnung von Kontaktfläche und Bearbeitungswerkzeug als automatisch gesteuerte Abfolge einzelner Positionierbewegungen durchgeführt wird.

Neben einer automatischen Steuerung der Bewegungen kann die räumliche Zuordnung von Kontaktfläche und Bearbeitungswerkzeug auch mechanisch gesteuert durch Anschläge oder dgl. vorgebbare Abfolge einzelner Bewegungen durchgeführt werden. Hierdurch ist eine sehr schnelle und robuste Durchführung der benötigten Bewegungen erreichbar, die auch bei Verschmutzungen oder dergleichen unproblematisch ausgeführt werden kann.

Eine weitere Ausgestaltung des erfindungsgemäßen Verfahrens kann vorsehen, daß die Drehorientierung der Schweißelektroden und damit die Einstellung der zu bearbeitenden Schweißelemente bei der Bearbeitung innerhalb der Bearbeitungsstation automatisiert verändert wird. Hierbei kann beispielsweise bei einer automatisch drehbaren Ausgestaltung der Schweißelektroden nach dem Erkennen der Notwendigkeit einer abtragenden Bearbeitung der Kontaktflächen die Schweißelektrode um eine Position weiter gedreht und damit ein neues Schweißelement in Eingriff gebracht werden, bis alle derartigen Schweißelemente benutzt wurden und außerhalb der tolerierten Werte liegen. Anschließend kann die derart abgenutzte Schweißelektrode in die erfindungsgemäße Bearbeitungsvorrichtung eingebracht und jedes der Schweißelemente in einem Durchgang, aber getrennt voneinander und gezielt aufgearbeitet werden, ohne daß die Schweißelektrode selbst außer der Drehbewegung eine neue Positionierung innerhalb der Bearbeitungsvorrichtung ausführen muß. Hierfür ist eine Koordinierung der Drehbewegung der Schweißelektroden in ihrer Halterung mit der Bearbeitung innerhalb der Bearbeitungsvorrichtung notwendig, die beispielsweise über eine gemeinsame Steuerung erfolgen kann.

Die Erfindung betrifft weiterhin eine Bearbeitungsvorrichtung zur Formgebung und/oder zum mechanischen Entfernen von Ablagerungen an Schweißelektroden für das Widerstandsschweißen, insbesondere zur Durchführung eines Verfahrens gemäß Anspruch 1, wobei die Schweißelektroden im wesentlichen scheibenförmig mit am Scheibenumfang ausgebildeten, im wesentlichen radial abstehenden Schweißelementen ausgebildet sind und zwei derartige scheibenförmige Schweißelektroden einander gegenüberliegend und die zu verschweißenden Bauteile zumindest abschnittsweise zwischen sich aufnehmend mit den Schweißelementen die zu verschweißenden Bauteile gegeneinander pressen, elektrisch kontaktieren und verschweißen. Eine derartige Vorrichtung ist dadurch gekennzeichnet, daß das Positionierungselement eine im wesentlichen parallele Führungsschiene für jede der Kontaktflächen aufweist. Durch die Ausbildung der Vorrichtung mit einem Positionierungselement können auch unter erschwerten Verhältnissen sowie ohne zusätzlichen großen Aufwand durch die an der Halterung der Schweißelektrode vorhandene Antriebseinrichtung die Kontaktflächen der Schweißelemente genau relativ zu dem Bearbeitungswerkzeug positioniert werden, wodurch die Bearbeitung entsprechend genau und schonend für die Schweißelemente ausgeführt werden kann. Damit sind aufwendige meßtechnische Verfahren zur Erfassung der Lage der Kontaktflächen überflüssig, auch kann aufgrund der nur geringen benötigten Genauigkeiten für die Vorpositionierung der Kontaktflächen vor dem Anlegen an das Positionierungselement die Grobpositionierung der Kontaktflächen durch nahezu alle technischen Einrichtungen aus dem Umfeld der Handhabungstechnik für Schweißeinrichtungen, wie spezielle Handhabungseinrichtungen oder Industrieroboter oder dergleichen durchgeführt werden.

Von Vorteil für die Genauigkeit bei der Abtragung der Kontaktflächen und die Positionierung der Kontaktflächen relativ zu dem Bearbeitungswerkzeug ist es, wenn die Führungsschiene entsprechend der Profilform der Kontaktflächen profiliert ist und die Kontaktflächen sich zumindest abschnittsweise in die Führungsschiene einlegen. Hierdurch ist eine weitere genauere Positionierung der üblicherweise zu mindestens am Rand profilierten Kontaktflächen möglich, da die Kontaktflächen sich auch bei kleinen Positionierungsfehlern genau in die Führungsschienen einlegen und damit eventuell bestehende Ungenauigkeiten ausgleichen. Auch ist die Führung der Kontaktflächen bei der Durchführung der Bearbeitung während der Relativbewegung zwischen Kontaktflächen und Positionierungselement stabiler als bei einer nur flächigen Anlage an einer zum Beispiel ebenen Fläche.

In einer ersten Ausgestaltung der erfindungsgemäßen Vorrichtung ist es denkbar, daß das Bearbeitungswerkzeug ein entsprechend der Profilform der Schweißelemente profilierter Fräser ist. Ein derartiger Fräser, der beispielsweise als ein am Umfang schneidender Formfräser gestaltet werden kann, dessen Rotationsachse im wesentlichen parallel zur Mittelachse der scheibenförmigen Schweißelektroden verläuft, bietet ähnlich wie bei einer Fräsmaschine eine sichere und hoch genaue Zerspanung der Oberfläche der Kontaktflächen. Dabei ist sowohl ein Bearbeiten der Kontaktflächen im Gleichlaufverfahren als auch im Gegenlaufverfahren möglich, wodurch die Ausbildung der Oberfläche der Kontaktflächen entsprechend beeinflußt werden kann. Hierbei ist es in weiterer Ausgestaltung auch denkbar, daß der Fräser mindestens eine entsprechend der Profilform der Schweißelemente angeordnete Wechselschneidplatte aufweist. Durch das Vorsehen entsprechender austauschbarer Schneidplatten, die an die Profilform der Schweißelemente angepaßt werden, kann nach einem Verschleiß der Schneiden des Fräsers ein entsprechender Ersatz schnell und kostengünstig erfolgen.

Ebenfalls ist es denkbar, daß der Fräser ein am Umfang schneidender Scheibenfräser ist, dessen Rotationsachse im wesentlichen senkrecht zur Mittelachse der scheibenförmigen Schweißelektroden verläuft. Ein derartiger Scheibenfräser hat den Vorteil, daß das Problem des Gleichlauffräsens beziehungsweise Gegenlauffräsens hier untergeordnet ist und durch die Geometrie des Fräsers eine sehr hohe Stabilität bei der Zerspanung vorliegt.

Es ist nicht nur denkbar, daß die Kontaktflächen spanend bearbeitet werden, sondern es kann das Bearbeitungswerkzeug auch ein entsprechend der Profilform der Schweißelemente profiliertes Polierwerkzeug oder dgl., insbesondere ein Polierwerkzeug mit rotierender Polierfläche sein. Durch das Polieren wird ein geringerer Abtrag als beim Fräsen erreicht, der für nicht übermäßig abgenutzte Kontaktflächen durchaus ausreichend sein kann und dadurch die Lebensdauer der Kontaktflächen und damit der Schweißelektroden insgesamt deutlich erhöht.

Ebenfalls ist es hinsichtlich der Bearbeitungsart denkbar, daß das Bearbeitungswerkzeug ein insbesondere entsprechend der Profilform der Schweißelemente profiliertes, feilenartiges Werkzeug mit linearer Arbeitsbewegung ist. Ein derartiges feilenartiges Werkzeug, das beispielsweise hin und her schwingend entlang einer linearen Bahn bewegt wird, kann beispielsweise bei groben Verunreinigungen größere Abtragungen der Kontaktflächen, bei denen es nicht zu genau auf die herzustellende Oberfläche der Kontaktflächen ankommt, einfach und zuverlässig erfüllen.

Weiterhin ist es denkbar, daß mehr als ein Bearbeitungswerkzeug, insbesondere ein Bearbeitungswerkzeug für jede der Kontaktflächen vorgesehen sind. Hierdurch können die Ergebnisse der Bearbeitung der Kontaktflächen bzw. auch die benötigte Zeit zur Bearbeitung reduziert werden, da beispielsweise nur noch ein Überlauf eines Werkzeuges über die Kontaktflächen durch die optimierten Bearbeitungsverhältnisse jedes der beiden Werkzeuge erforderlich wird. Insbesondere, wenn etwa beim Fräsen der Kontaktflächen die mehreren Bearbeitungswerkzeuge hinsichtlich ihrer Bewegungsrichtung unterschiedliche Bewegungen, insbesondere Rotationsbewegungen unterschiedlicher Drehrichtungen ausführen, kann das Problem des Gegenlauf- bzw. Gleichlauffräsens dadurch gelöst werden, daß entsprechend der Bewegungsrichtung der Rotationsbewegung das jeweils günstigste Verfahren für jede der Kontaktflächen eingestellt wird.

Hinsichtlich der Durchführung der benötigten Bewegungen bei der Bearbeitung und auch beim Positionieren der Kontaktflächen relativ zu dem Bearbeitungswerkzeug ist es denkbar, daß der Antrieb der Vorrichtung für die lineare Hinbewegung und/oder die lineare Rückbewegung pneumatisch, hydraulisch oder elektrisch ausgebildet ist.

Entsprechendes gilt auch hinsichtlich des Antriebes der Bearbeitungswerkzeuge für die Bearbeitung der Kontaktflächen, der pneumatisch, hydraulisch oder elektrisch erfolgen kann.

Eine einfache technische Umsetzung der Relativbewegung zwischen dem Bearbeitungswerkzeug und den Kontaktflächen läßt sich erreichen, wenn das Positionierelement auf einem schlittenartig längsverschieblichen Wagen angeordnet ist, der die an dem Positionierelement und ortsfest positionierten Schweißelektroden an dem mit dem Wagen verschieblichen Bearbeitungswerkzeug vorbei bewegt. Hierdurch bewegen sich Positionierelement und Bearbeitungswerkzeug gemeinsam relativ an den Kontaktflächen der Schweißelemente vorbei, wobei die Kontaktflächen der Schweißelemente auf dem Positionierungselement gleiten. Hierdurch ist eine Führung der Kontaktflächen auf dem beispielsweise profiliert ausgebildeten Positionierungselement gewährleistet und damit eine hohe Genauigkeit der Bearbeitung der Kontaktflächen erreichbar.

In weiterer Ausgestaltung kann vorgesehen sein, daß das Bearbeitungswerkzeug derart innerhalb des Positionierungselementes angeordnet ist, daß das Bearbeitungswerkzeug ein- oder auch beidseitig mit einem definierten Maß gegenüber dem Positionierungselement in die relative Bahn der Kontaktflächen der Schweißelemente hervorragt. Wird die Kontaktfläche wie etwa beim Diktenhobeln aus der Holztechnik bekannt entlang eines Abschnittes des Positionierungselementes bewegt, der um den Betrag des zu erreichenden Abtrages von der Kontaktfläche versetzt zu dem Außenumfang des Bearbeitungswerkzeuges in Richtung auf das Bearbeitungswerkzeug versetzt ist, so wird die Kontaktfläche um genau diesen Versatz bearbeitet und entsprechend abgetragen. Eine Verstellung des Versatzes zwischen Positionierungselement und Bearbeitungswerkzeug kann in weiterer Ausgestaltung beispielsweise mittels einer Exzenterverstellung oder sonstiger Verstellungen wie etwa Einstellschrauben oder dergleichen erfolgen.

In einer anderen Ausgestaltung der Bearbeitungsvorrichtung kann ein im wesentlichen keilförmiges Stabilisierelement derart zwischen den sich in Bearbeitungsstellung gegenüberliegenden und gegeneinander gepressten Schweißelementen angeordnet werden, dass die Lage der Kontaktflächen der Schweißelemente während der Bearbeitung durch das mindestens eine Bearbeitungswerkzeug relativ zu dem Bearbeitungswerkzeug konstant gehalten wird. Bei der Bearbeitung der Kontaktflächen der Schweißelemente kann es ansonsten dazu kommen, dass die Kontaktflächen sich aufgrund der Klemmkraft aus der Schweißzange in ihrer Lage zueinander und zu den Bearbeitungswerkzeugen verändern und damit das Bearbeitungsergebnis negativ beeinflussen. Um hier eine Stabilisierung zu erreichen, können die sich gegenüber liegenden Schweißelektroden zusätzlich während der Durchführung der Bearbeitung mechanisch dadurch auf dem definierten Abstand zueinander gehalten werden, indem das keilförmige Stabilisierelement soweit zwischen die Schweißelektroden eingeschoben wird, dass das keilförmige Stabilisierelement an in ihrem Durchmesser unveränderlich bleibenden Umfangsabschnitten der Schweißelektroden anliegt und die Schweißelektroden damit unabhängig von dem jeweiligen Maß der zu bearbeitenden Kontaktflächen eine stabilisierende Anlagefläche für die Schweißelektroden gegenüber einer von außen wirkenden Klemmung der Schweißelektroden in ihrer jeweiligen Bearbeitungsstellung bilden. Die keilförmige Ausgestaltung des Stabilisierelementes dient hierbei zum Ausgleich des sich aufgrund der Abnutzung der Kontaktflächen bzw. der Maßveränderungen der Schweißelemente aufgrund der Nacharbeitung ständig ändernden Abstandes der Schweißelektroden voneinander. Der Keil des Stabilisierelementes wird dazu einfach soweit zwischen die Schweißelektroden eingeschoben und in Kontakt mit den an in ihrem Durchmesser unveränderlich bleibenden Umfangsabschnitten der Schweißelektroden in Kontakt gebracht, dass eine eindeutige und stabile Anlagefläche der Schweißelektroden an dem Stabilisierelemente entsteht und danach Verschiebungen und Lageänderungen der Schweißelektroden zueinander nicht mehr auftreten können.

Von Vorteil ist es weiterhin, wenn ein Antrieb das keilförmige Stabilisierelement entlang einer linearen Führung zwischen die korrespondierenden Anlagenflächen der Schweißelektroden einschiebt, wobei es denkbar ist, dass der Antrieb für das keilförmige Stabilisierelement nach dem Einschieben des keilförmigen Stabilisierelementes auch die Vorschubbewegung des mindestens einen Bearbeitungswerkzeuges ausführt.

Eine besonders bevorzugte Ausführungsform der erfindungsgemäßen Bearbeitungsvorrichtung zur Durchführung des erfindungsgemäßen Verfahrens zeigt die Zeichnung.

Es zeigen:
- Figur 1: - eine erste dreidimensionale Ansicht einer Bearbeitungsvorrichtung zur Durchführung des erfindungsgemäßen Verfahrens mit schematisch dargestellten Schweißelektroden und der Zuordnung der Schweißelektroden zur Führungsschiene,
- Figur 2: - eine andere dreidimensionale Ansicht einer Bearbeitungsvorrichtung gemäß Figur 1,
- Figur 3: - eine weitere dreidimensionale Ansicht einer Bearbeitungsvorrichtung gemäß Figur 1 mit einer Darstellung der Schweißzange, an der die Schweißelektroden angeordnet sind,
- Figur 4: - eine dreidimensionale Darstellung der Verhältnisse im Bereich des Bearbeitungswerkzeuges der Bearbeitungsvorrichtung gemäß Figur 1,
- Figur 5: - die Verhältnisse im Bereich des Bearbeitungswerkzeuges der Bearbeitungsvorrichtung gemäß Figur 3 in einer Draufsicht,
- Figur 6: - Ansichten eines Bearbeitungswerkzeuges der Bearbeitungsvorrichtung gemäß Figur 1,
- Figur 7: - eine andere Ausgestaltung der erfindungsgemäßen Vorrichtung mit jeweils einem eigenen Positionierelement für jede der Schweißelektroden und einem zwischen den Schweißelektroden angeordneten Stabilisierelement in einer räumlichen Ansicht,
- Figur 8a-b -: eine ebene Draufsicht der Vorrichtung gemäß Figur 7 beim Positionieren der Schweißelektroden relativ zu den Bearbeitungswerkzeugen mittels der Positionierelemente, in Figur 8a dargestellt mit und in Figur 8b dargestellt ohne das zwischen den Schweißelektroden angeordnete Stabilisierelement,
- Figur 9: - eine ebene Draufsicht der Vorrichtung gemäß Figur 7 nach dem Einschieben des Stabilisierelementes zwischen die Schweißelektroden mit an den Schweißelektroden anliegendem Stabilisierelement,
- Figur 10a-b: - eine ebene Draufsicht der Vorrichtung gemäß Figur 7 nach dem Bearbeiten der Kontaktflächen der Schweißelektroden durch die Bearbeitungswerkzeuge, in Figur 10a dargestellt mit und in Figur 10b dargestellt ohne das zwischen den Schweißelektroden angeordnete Stabilisierelement.

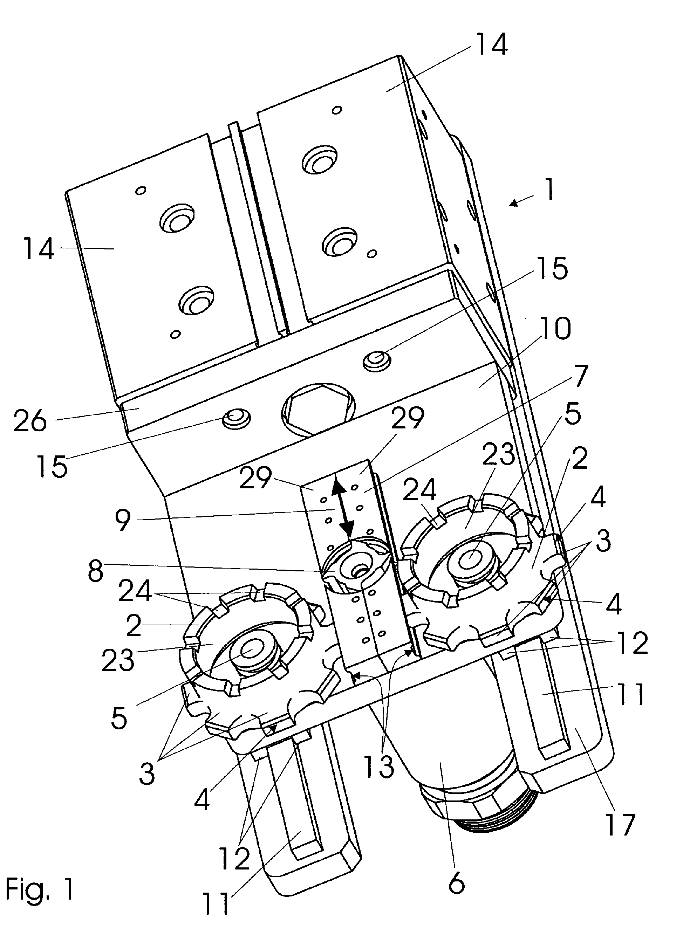

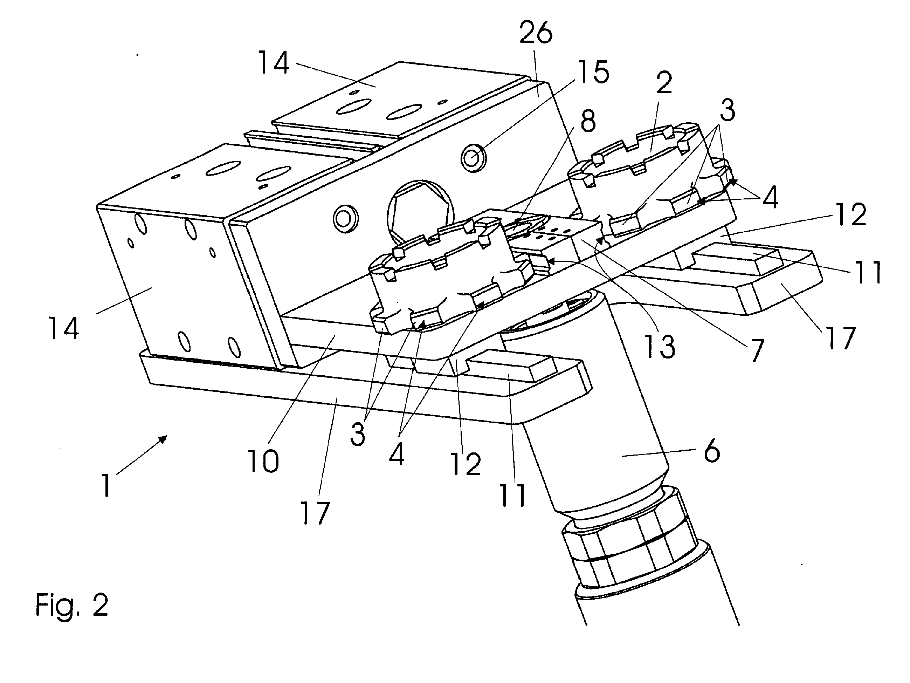

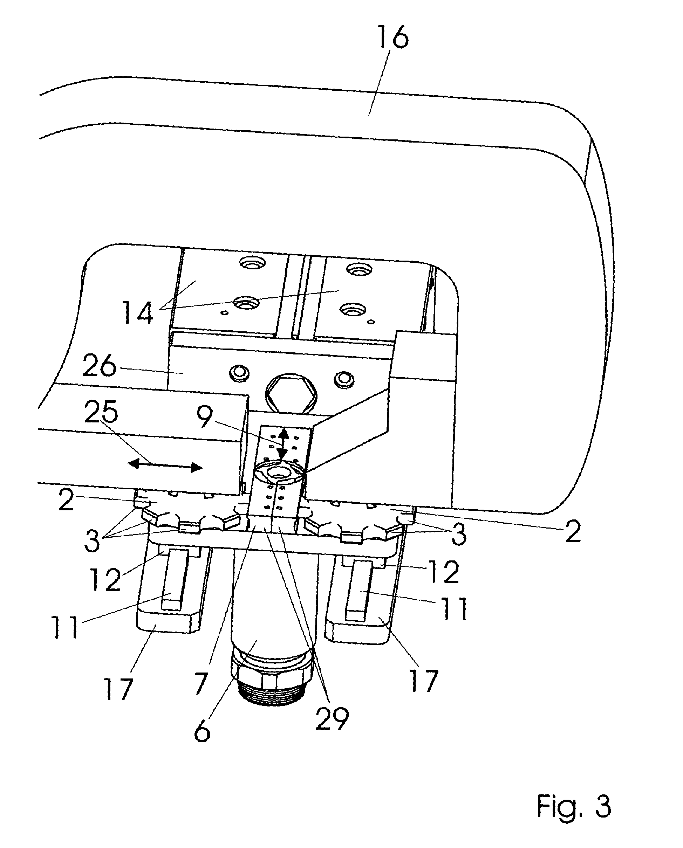

In den Figuren 1 bis 3 sind in verschiedenen dreidimensionalen Ansichten die wesentlichen Funktionselemente der erfindungsgemäßen Bearbeitungsvorrichtung 1 zur Durchführung des erfindungsgemäßen Verfahrens dargestellt, wobei zwei einander gegenüberliegend angeordnete Schweißelektroden 2 wegen der verbesserten Sichtbarkeit der anderen Bauteile in den Figuren 1 und 2 separat und ohne den in der Figur 3 dann erkennbaren bügelartigen Schweißelektrodenträger 16 dargestellt sind.

Die Schweißelektroden 2 bestehen hierbei aus einem im wesentlichen scheibenartigen Körper, an dessen einem Endbereich Schweißelemente 3 wie die Zähne eines Zahnrades von dem scheibenartigen Körper der Schweißelektroden 2 radial abstehen. Die radialen abstehenden, tangential an den Umfang der Schweißelemente 3 orientierten Außenflächen der Schweißelemente 3 bilden hierbei die Kontaktflächen 4, mit denen die Schweißelemente 2 ein nicht weiter dargestelltes, mehrteiliges Werkstück in der Benutzungsanordnung zwischen sich einklemmen und über einen Stromdurchgang miteinander in grundsätzlich bekannter Weise punktschweißen. Die Anordnung der Schweißelektroden 2 beim Schweißen eines Werkstückes entspricht hierbei im wesentlichen der Anordnung gemäß der Figur 1 bzw. 2, wobei das Werkstück durch das noch näher beschriebene Positionierungselement 7 ersetzt wird. Zur genauen Orientierung der Schweißelektroden 2 bzw. der Schweißelemente 3 in der nicht weiter dargestellten Aufnahme des bügelartigen Schweißelektrodenträger 16 dienen die oberseitig der Schweißelektrode 2 erkennbaren Nuten 24, die radial von der Drehachse 5 der Schweißelektrode 2 ausgehend in einem ringartigen Wulst 23 eingebracht sind. In die Nuten 24 greifen nicht dargestellte Vorsprünge an dem bügelartigen Schweißelektrodenträger 16 ein und sorgen damit für eine genaue Drehorientierung der Schweißelektroden 2 relativ zueinander und zu dem bügelartigen Schweißelektrodenträger 16.

Die beiden sich in der Lage gemäß Figuren 1 bis 3 gegenüberliegenden Schweißelemente 3 weisen an ihren Kontaktflächen 4 ebene Flächenabschnitte auf, die an einem üblicherweise dünnwandigen, mehrteiligen und zu verschweißenden Werkstück vollflächig anliegen und einerseits den mechanischen Druck auf das Werkstück ausüben und zum anderen die gute elektrische Einkopplung des Schweißstromes bewirken müssen. Diese Kontaktflächen 4 müssen daher bestimmten geometrischen Anforderungen hinsichtlich der Ebenheit und auch der Oberflächenqualität entsprechen, auch wenn sie schon länger in Benutzung sind. Da aufgrund des Schweißvorganges sich an der Oberfläche der Kontaktflächen 4 Ablagerungen bilden können und aufgrund der hohen Temperaturen und der verwendeten Materialien für die Schweißelektroden 2 sowie Wechselwirkungen mit dem zu verschweißenden Material der Werkstücke neben Ablagerungen auch Formänderungen auftreten können, ist es erforderlich, die Kontaktflächen 4 in regelmäßigen Abständen hinsichtlich ihrer Formgebung und ihrer Ebenheit nachzuarbeiten, um immer gleiche Kontaktverhältnissen zwischen den Schweißelementen 3 und den Werkstücken herstellen zu können. Hierbei kommt es auf eine hohe Reproduzierbarkeit der geometrischen Verhältnisse bei der Anlage der Kontaktflächen 4 an den Werkstücken besonders an.

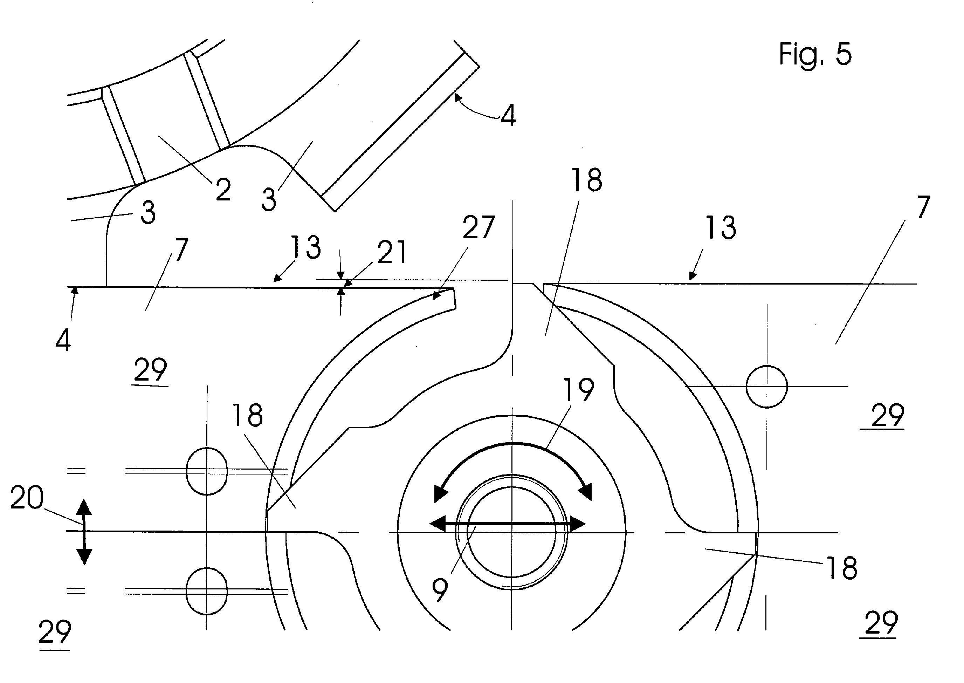

Die beiden Schweißelektroden 2 und damit die Schweißelemente 3 sind, wie in der Figur 3 nur schemenhaft angedeutet, relativ zueinander an dem bügelartigen Schweißelektrodenträger 16 in einer Verstellrichtung 25 zueinander verstellbar angeordnet, wobei üblicherweise eine Schweißelektrode 2 fest angeordnet und die andere Schweißelektrode 2 beispielsweise über einen nicht dargestellten pneumatischen Zylinder oder dergleichen verschiebbar an dem bügelartigen Schweißelektrodenträger 16 gehalten ist. Für das Punktschweißen von Werkstücken wird hierbei der bügelartige Schweißelektrodenträger 16 beispielsweise durch eine spezielle Vorrichtung oder einen Industrieroboter so an die Werkstücke heran gefahren, daß durch das Verschieben zumindest einer der Schweißelektroden 2 die Werkstücke zwischen den Schweißelementen 3 geklemmt werden, woraufhin dann der Stromdurchgang zum Punktschweißen erfolgen kann. Diese Beweglichkeit zu mindestens einer der Schweißelektroden 2 kann nun dazu genutzt werden, um eine einfache und gleichzeitig genaue Positionierung der Schweißelektroden 2 bzw. der Schweißelemente 3 mit ihren Kontaktflächen 4 zu einem an der Bearbeitungsvorrichtung 1 vorgesehenen Werkzeug 8, hier in Form eines Fräsers 8 vorzunehmen. Für die genaue Positionierung dient das Positionierungselement 7, das aus zwei zueinander verstellbaren Leisten 29 besteht, die parallel zueinander angeordnet und an ihren den Schweißelementen 3 zugewandten Außenseiten mit Profilierungen 13 derart versehen sind, daß die Profilierungen 13 zur Aufnahme der entsprechenden Form der Schweißelemente 3 dienen können. Hierdurch findet zum einen eine genaue Positionierung der Schweißelemente 3 und damit der Schweißelektroden 2 relativ zu dem Positionierungselement 7 und damit zu dem Fräser 8 statt, weiterhin wird auch die genaue Lage der Schweißelemente 3 in Richtung der Drehachse des Fräsers 8 und damit bezogen auf die Profilierung 22 der Zähne 18 des Fräsers 8 erreicht. Der Abstand der Kontaktflächen 4 der einander gegenüberliegend angeordneten Schweißelemente 3 der Schweißelektroden 2 läßt sich hierbei auf den Durchmesser des Fräsers 8 oder eines anderen Werkzeuges 8 dadurch abstimmen, daß die beiden Leisten 29 des Positionierungselementes 7 in Richtung der Verbindung zwischen den gegenüberliegenden Schweißelementen 3 verstellbar angeordnet sind und dabei einen äußeren Abstand zur Anlage der Kontaktflächen 4 herstellen, der, wie in Figur 5 noch näher zu erkennen und dort auch erläutert, auf die Reinigung der Kontaktflächen 4 hier durch Zerspanung mittels des Fräsers 8 abgestimmt werden kann.

Der Fräser 8, der durch einen nur schematisch angedeuteten Antrieb 6 in eine schnelle Drehung in Drehrichtung 19 beispielsweise durch einen pneumatischen Antrieb versetzt werden kann, ist bei der Ausgestaltung gemäß Figur 1 in einer entsprechenden Ausnehmung 27 des Positionierungselementes 7 aufgenommen, wobei das Positionierungselement 7 und der Fräser 8 mit dem daran angeordneten Antrieb 6 an einem gegenüber einer Grundplatte 17 verschiebbaren Wagen 10 festgelegt sind, der entlang von Führungen 11 und geführt durch einen Führungsschuh 12 für jede Führung 11 in Bearbeitungsrichtung 9 leicht und genau verschoben werden kann. Die Verschiebung erfolgt, wie hier nur schematisch angedeutet, durch pneumatische Antriebe in Form von pneumatischen Zylindern 14, die mittels je einer Kolbenstange 15 auf einen an dem Wagen 10 festgelegten Winkel 26 einwirken. Bildlich gesprochen kann sich der Wagen 10 und damit auch das Positionierungselement 7 mit dem Fräser 8 zwischen den das Positionierungselement 7 berührenden bzw. leicht klemmenden Schweißelektroden 2, die an den profilierten Außenflächen 13 des Positionierungselementes 7 mit den Kontaktflächen 4 der Schweißelemente 3 auf Kontakt anliegen, hindurch bewegen und dabei in noch näher beschriebener Weise die Oberfläche der Kontaktflächen 4 bearbeiten. Hierbei kann durch entsprechende Druckbeaufschlagung der pneumatischen Zylinder 14 der Wagen 10 sowohl in der einen Richtung als auch in der anderen Richtung der Bearbeitungsrichtung 9 verschoben werden.

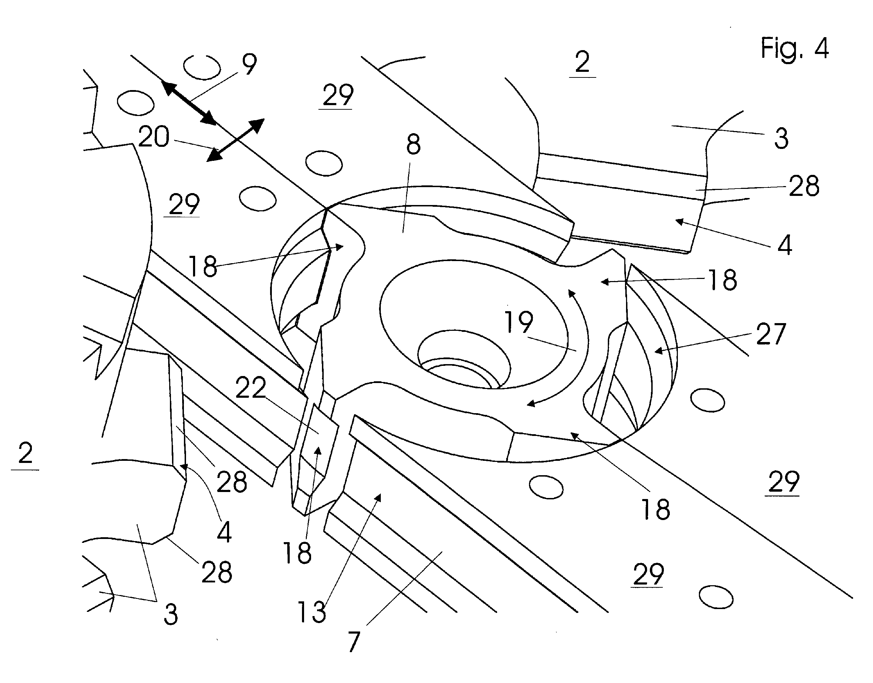

Wie insbesondere aus den Figuren 4 und 5 hinsichtlich der geometrischen Verhältnisse bei der Bearbeitung der Kontaktflächen 4 vergrößert hervorgeht, rotiert der Fräser 8, der mit profilierten Zähnen 18 versehen ist, entlang der Drehrichtung 19 in einer ebenfalls gegengleich profilierten Ausnehmung 27. Hierbei ist die Ausnehmung 27 und der Fräser 8 so dimensioniert, daß an den beiden profilierten Außenflächen 13 des Positionierungselementes 7 die profilierten Zähne 18 des Fräsers 8 ein kleines Stück aus der Ausnehmung 27 austauchen und, ähnlich wie bei der Kreissäge oder bei einem rotierenden Hobel wie etwa in der Holzbearbeitung bekannt, ein in diesen Bereich entlang der profilierten Außenflächen 13 des Positionierungselementes 7 entlang bewegtes Werkstück, hier die Schweißelemente 3 der Schweißelektroden 2 zerspanen können. Hierfür ist, wie in der Figur 5 genauer erkennbar ist, im Einlaufbereich in den Zerspanungabschnitt des Positionierungselementes 7 an dem Fräser 8 die in Bewegungsrichtung 9 vorneliegende Leiste 29 des Positionierungselementes 7 um einen kleinen Betrag, nämlich die Abtragungsdicke 21, schmaler ausgebildet bzw. anders eingestellt als der in Bewegungsrichtung 9 nach dem Fräser 8 liegende Bereich des Positionierungselementes 7. Hierdurch wird einen entlang der profilierten Abschnitte 13 des Positionierungselementes 7 verschobenes Schweißelement 3 genau um den Betrag der Abtragungsdicke 21 von dem entsprechend geformten Fräser 8 zerspant und dabei die Kontaktflächen 4 des Schweißelementes 3 gereinigt und aufgrund der Profilierung 22 der Zähne 18 des Fräsers 8 ebenfalls in die bestimmungsgemäße Profilierung gebracht. In der Terminologie der Holzbearbeitung würde man sagen, daß durch den Fräser 8 das Schweißelement 3 abgerichtet wird. Die Abtragungsdicke 21 kann hierbei durch eine nicht näher dargestellte und nur schematisch angedeutete Verstellung der beiden Leisten 29 des Positionierungselementes 7 in Verstellrichtung 20 eingestellt werden, wodurch eine Anpassung der Abtragungsdicke 21 an den Abnutzungszustand jedes einzelnen Schweißelementes 3 ermöglicht wird. Eine derartige Anpassung kann beispielsweise von Hand über einen nicht dargestellten Exzenterantrieb erfolgen, selbstverständlich ist auch eine automatische Anpassung beispielsweise aufgrund einer ebenfalls automatisch durchgeführten Messung des Abnutzungszustandes jedes Schweißelementes 3 ermöglicht. Hierbei ist anzumerken, daß die Schweißelemente 3 einer Schweißelektrode 2 durchaus auch unterschiedlich nachbearbeitet werden können, da die Schweißelemente 3 einer Schweißelektrode 2 nicht identisch bezogen auf den Abstand vom Drehpunkt 5 der Schweißelektrode 2 bearbeitet werden müssen, da durch die Verstellbarkeit der Schweißelektroden 2 zueinander in dem bügelartigen Schweißelektrodenträger 16 immer ein genaues Zusammenfahren der Schweißelemente 3 auch unterschiedlich bearbeiteter Schweißelektroden erfolgen wird.

Die Profilierung 22 der Zähne 18 des Fräsers 8 dient dafür, um zum einen eine Stabilisierung der Schweißelemente 3 parallel zur Drehachse des Fräsers 8 bei der Bearbeitung der Kontaktflächen 4 zu erreichen, zum anderen werden die Fasen 28 an die Schweißelemente 3 angefräst bzw. nachgefräst, die aufgrund der Geometrie der Schweißelektroden 2 von Bedeutung für das Verhalten bei den Punktschweißungen ist.

In der Ausführung der Bearbeitungsvorrichtung 1 gemäß den Figuren 1 bis 3 werden beide einander gegenüberliegenden Schweißelemente 3 gleichzeitig durch den Fräser 8 bearbeitet, wobei je nach Durchlaufrichtung 9 des Fräsers 8 zwischen den Schweißelementen 3 hindurch das eine Schweißelement 3 in Gegenlauf und das andere Schweißelement 3 im Gleichlauf gefräst werden. Hierdurch kommt es aufgrund der jeweiligen Zerspanungsverhältnisse dazu, daß eine der beiden Kontaktflächen 4 möglicherweise mit Rattermarken aufgrund des Fräsvorganges versehen ist, die bei der späteren Verwendung der Schweißelektroden 2 stören können. Deshalb wird üblicherweise bei einer derartigen simultanen Bearbeitung beider Kontaktflächen 4 der einander gegenüberliegenden Schweißelemente 3 in einem ersten Hub der Wagen 10 in einer der beiden Bearbeitungsrichtungen 9 zwischen den Schweißelektroden 2 hindurch gefahren, woraufhin in einem zweiten Hub der Wagen 10 wieder zurückfährt und dabei der Fräser 8 möglicherweise entstandene Rattermarken auf einer der Kontaktflächen 4 wieder glättet und damit für absolut ebene und hochwertige Kontaktflächen 4 sorgt.

Es selbstverständlich auch denkbar, wenngleich nicht in den Figuren dargestellt, daß ein Fräser 8 nur eine der beiden Kontaktflächen 4, die etwa an einer profilierten Außenfläche 13 des Positionierungselementes 7 anliegt, in einem Durchgang bearbeitet, wobei dann die Drehrichtung 19 des Fräsers 8 optimal auf die Zerspanung dieser Kontaktfläche 4 ausgerichtet werden kann. Hierdurch ist es möglich, sonst möglicherweise entstehende Rattermarken auf der Kontaktfläche 4 zu vermeiden. In einem zweiten Hub kann dann die andere Kontaktfläche 4 des gegenüberliegenden Schweißelementes 3 ebenfalls bearbeitet werden.

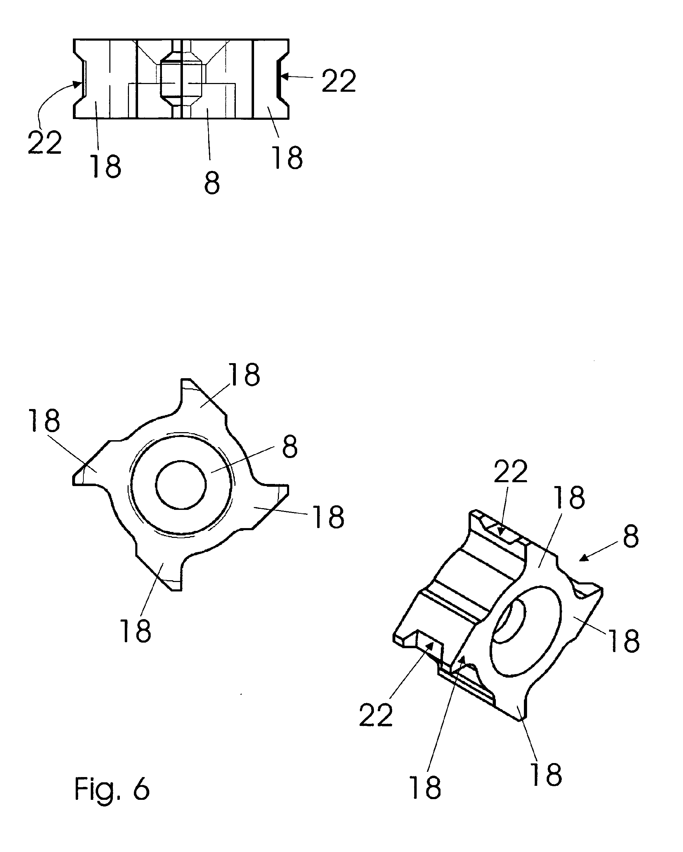

In der Figur 6 ist in verschiedenen Ansichten noch einmal die Gestaltung eines beispielhaft ausgebildeten Fräsers 8 dargestellt, der außenseitig im Bereich seiner Schneiden 18 mit Profilierungen 22 versehen ist, die die Außenformen der Schweißelemente 3 mit den Fasen 28 und den Kontaktflächen 4 herstellen.

Es ist selbstverständlich auch denkbar, in den Figuren allerdings nicht dargestellt, daß anstelle des Fräsers 8 etwa ein Polierwerkzeug oder ein anderes Bearbeitungswerkzeug verwendet werden kann, wobei viele der vorstehend ausgeführten Punkte auch hierfür gelten würden. Denkbar ist es auch, daß anstelle eines rotatorischen Bearbeitungswerkzeuges ein etwa feilenähnlich ausgebildetes, lineares Bearbeitungswerkzeug zum Einsatz kommt, das keine gesonderte Antriebsbewegungen durch einen Antrieb 6 benötigt, sondern beispielsweise aufgrund einer mehrfachen Verschiebung des Wagen 10 zwischen den einander gegenüberliegenden Schweißelementen 3 eine entsprechende Zerspanung oder Glättung bzw. Profilierung der Schweißelemente 3 bewirkt.

Von Vorteil ist es, wenn die Bearbeitungsvorrichtung 1 so im Arbeitsbereich eines den bügelartigen Schweißelektrodenträger 16 bewegenden Industrieroboters oder dergleichen Bewegungseinrichtung angeordnet ist, daß der bügelartige Schweißelektrodenträger 16 mit den daran angeordneten Schweißelektroden 2 in den Arbeitsbereich der Bearbeitungsvorrichtung 1 eingeschwenkt werden kann und dann nach dem Klemmen der Schweißelektroden 2 mit den Schweißelementen 3 in dem Positionierungselement 7 die entsprechenden Bewegungen des Wagens 10 und damit des Bearbeitungswerkzeuges 8 einfach und ohne zusätzliche Bewegung des Industrieroboters oder der Bewegungseinrichtung ausgeführt werden können. Hierdurch ist insbesondere auch die Genauigkeit der Bearbeitung der Kontaktflächen 4 und die Geschwindigkeit für das häufigere Ausführen derartiger Bearbeitungen der Kontaktflächen 4 optimierbar.

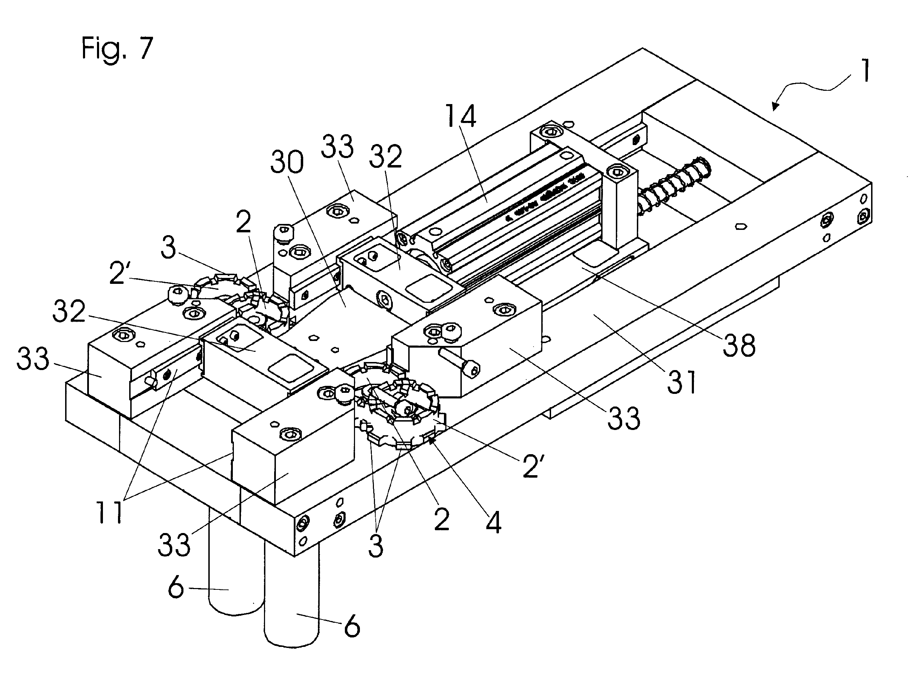

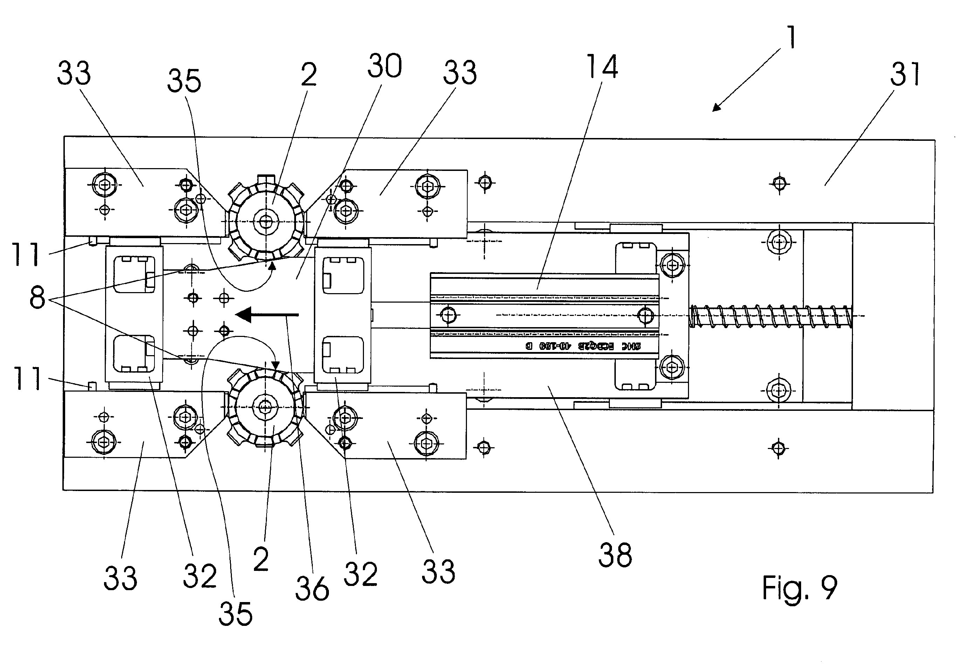

In den Figuren 7 bis 10 ist eine andere Ausgestaltung der erfindungsgemäßen Bearbeitungsvorrichtung 1 dargestellt, bei der eine Positionierung der Kontaktflächen 4 der sich gegenüberliegenden Schweißelektroden 2 über je ein einzelnes Positionierelement 7 für jede der Schweißelektroden 2 realisiert ist. Diese Bearbeitungsvorrichtung 1 entspricht hierbei in ihrer Grundfunktion derjenigen der zu den Figuren 1 bis 6 erläuterten, so dass im Folgenden nur auf die bestehenden Unterschiede eingegangen werden und ansonsten auf die vorstehende Beschreibung verwiesen werden soll.

Die Bearbeitungsvorrichtung 1 weist eine auf einem Rahmen 31 gebildete Anordnung aus einem hier pneumatischen Antrieb 14 mit zwei beweglichen Jochen 32 auf, die in parallel angeordneten Führungsbacken 33 mit Führungen 11 längsbeweglich gelagert sind. Die Führungen 11 legen dabei die Verschiebung eines in seiner Funktion noch näher erläuterten keilförmig ausgebildeten Stabilisierelementes 30 sowie einer längsbeweglichen Platte 38 fest, auf der hier als Fräser ausgebildete Bearbeitungswerkzeuge 8 für jede der Kontaktflächen 4 der sich in Bearbeitungsstellung gegenüberliegenden Schweißelektroden 2 vorgesehen sind. Die Bearbeitungswerkzeuge 8 sind hierbei fest zueinander beabstandet auf der Platte 38 mit ihren Antrieben 6 angeordnet und führen vorzugsweise gegenläufige Drehbewegungen relativ zu dieser Platte 38 aus.

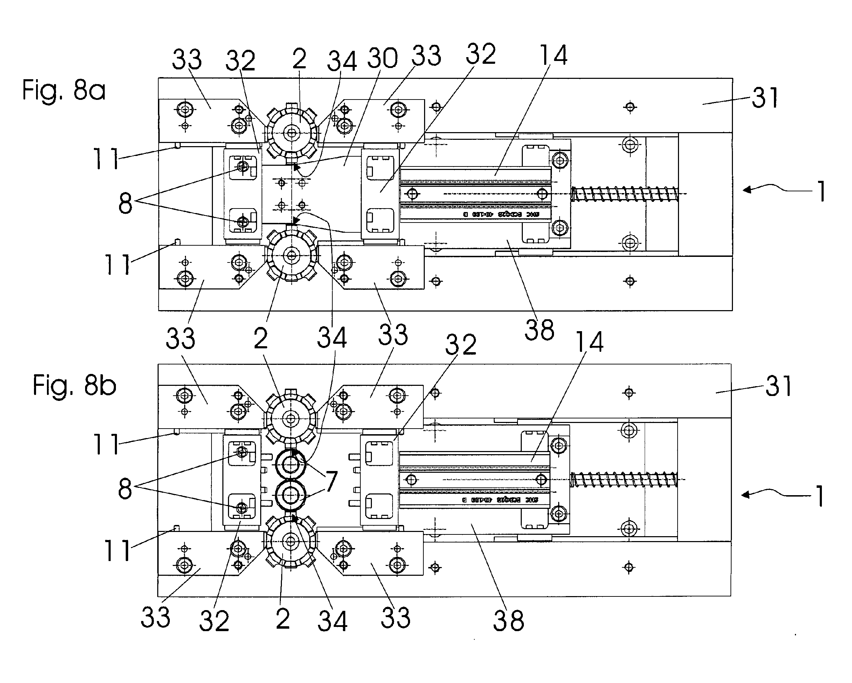

Ebenfalls in fest zueinander angeordnetem Zustand auf der Platte 38 befestigt und in den Figuren 8a und 8b (mit aus Gründen besserer Erkennbarkeit abgenommenem keilförmigem Stabilisierelement 30) besser zu erkennen sind zwei ringförmig ausgebildete Positionierelemente 7, die zur Positionierung der jeweils zu bearbeitenden Kontaktflächen 4 beim Zusammenfahren der Schweißelektroden 2 dienen. Diese Positionierelemente 7 liegen dabei derart in der Bahn der aufeinander zufahrenden Schweißelektroden 2, dass die Kontaktflächen 4 der Schweißelektroden 2 in ihrer Bearbeitungsposition relativ zu den Bearbeitungswerkzeugen 8 zu liegen kommen und die Positionierelemente 7 in den Anlagepunkten 34 berühren. Hierzu sind wie schon vorstehend beschrieben die Positionierelemente 7 derart auf der Platte 38 angeordnet, dass sie einen etwas geringeren Abstand zueinander aufweisen als der jeweilige Bearbeitungsumfang der Bearbeitungswerkzeuge 8, beispielsweise können die Abstände um nur wenige zehntel oder hundertstel Millimeter zueinander differieren.

Sind die Kontaktflächen 4 der Schweißelektroden 2 derart zueinander positioniert und damit bearbeitungsfertig angeordnet und voneinander beabstandet, so müssen die Schweißelektroden 2 bei der Bearbeitung möglichst genau in dieser Lage verbleiben, um eine genaue und gleichbleibende Bearbeitung der Kontaktflächen 4 zu gewährleisten. Da die Positionierelemente 7 bei der Bearbeitung der Kontaktflächen 4 im Wege wären, müssen diese zum Eingriff der Bearbeitungswerkzeuge 8 aus dem Kontakt mit den Kontaktflächen 4 herausbewegt werden. Dadurch könnte sich aber die Lage der Schweißelektroden 2 unter dem Druck der Verstellung in der Schweißzange 16 relativ zu den Bearbeitungswerkzeugen 8 verändern und damit die Bearbeitung beeinflussen.

Zur Vermeidung derartiger Lageänderungen der Schweißelektroden 2 zueinander wird vor der Ausführung der Bearbeitung mit Hilfe des pneumatischen Antriebes 14 ein keilförmig ausgestaltetes Stabilisierelement 30 zwischen die Schweißelektroden 2 eingeschoben, das zwar an den Schweißelektroden 2 anliegt, aber in einem Bereich der Schweißelektroden 2, der nicht für die Bearbeitung mit den Bearbeitungswerkzeugen 8 benötigt wird. Innenliegend zu den Schweißelementen 3 ist an jeder Schweißelektroden 2 ein im wesentlichen zylindrischer Bund angeordnet, der durch die Abnutzung oder Bearbeitung der Schweißelemente 3 nicht verändert wird und daher jeweils unabhängig von der Drehorientierung der Schweißelektrode 2 und vom Bearbeitungszustand der Schweißelemente 3 eine genaue Anlagefläche für die Abstützung der Schweißelektroden 2 gegenüber den Klemmkräften in Verstellrichtung 25 der Schweißelektroden 2 aus der Schweißzange 16 bilden kann. Gegen diesen zylindrischen Bund kann sich die Schweißelektrode 2 nach dem Einschieben des keilförmigen Stabilisierelementes 30 in Einschubrichtung 36 abstützen und die Schweißelektroden 2 und damit die zu bearbeitenden Kontaktflächen 4 werden in ihrer Lage stabilisiert. Die keilförmige Ausbildung des keilförmigen Stabilisierelementes 30 dient dazu, den jeweils sich ändernden Abstand der Kontaktflächen 4 der Schweißelektroden 2 abhängig von Abnutzungsgrad der Kontaktflächen 4 bzw. der Schweißelemente 3 ausgleichen zu können. Werden die Schweißelemente 3 im Laufe der Zeit abgenutzt bzw. durch die Nacharbeitung in der Bearbeitungsvorrichtung 1 kleiner, so müssen die Schweißelektroden 2 immer weiter zusammen gestellt werden, bis die Kontaktflächen 4 an den Positionierelementen 7 zum anliegen kommen. Daher verändert sich auch der Mittenabstand der Schweißelektroden 2 voneinander ständig und diese Änderung kann über die Keilform des keilförmigen Stabilisierelementes 30 ausgeglichen werden, indem dieses keilförmige Stabilisierelement 30 immer soweit zwischen die Schweißelektroden 2 eingeschoben wird, bis es an den unverändert bleibenden zylindrischen Bunden der Schweißelektroden 2 anliegt.

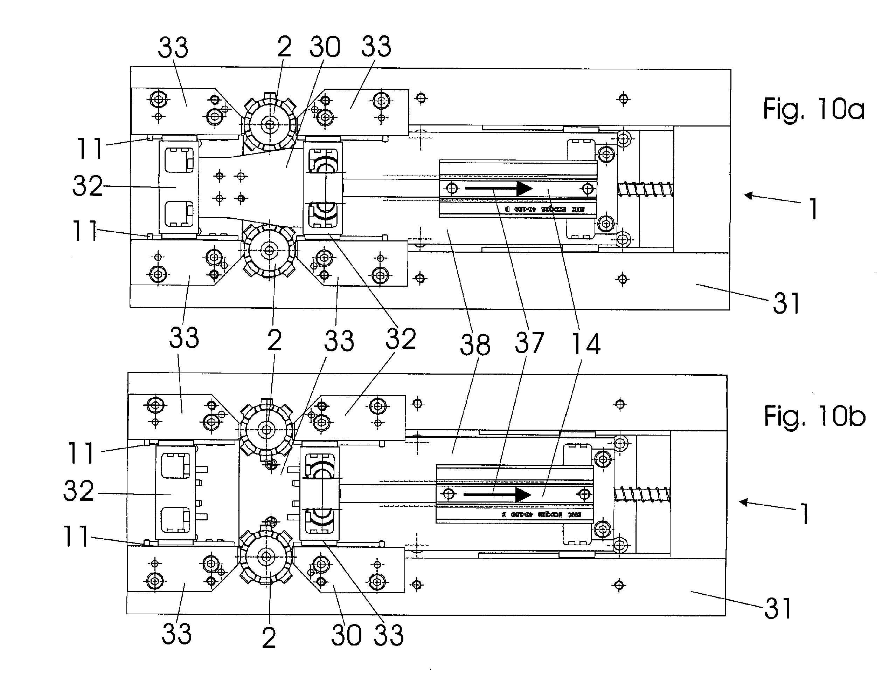

Die derart in ihrer Relativlage relativ zu den Bearbeitungswerkzeugen 8 stabilisierten Schweißelektroden 2 werden gemäß Figur 10 a und 10b dadurch bearbeitet, dass der pneumatische Antrieb 14 nach dem Einschieben des keilförmigen Stabilisierelementes 30 mit seinem anderen Ende die Platte 38 in Bearbeitungsrichtung 37 verschiebt und dadurch die Bearbeitungswerkzeuge 8 gleichzeitig an beiden zu bearbeitenden Kontaktflächen 4 vorbei bewegt. Ebenfalls werden automatisch die Positionierelemente 7 von den Kontaktflächen 4 weg verschoben, so dass die Kontaktflächen 4 für die Bearbeitung durch die Bearbeitungswerkzeuge 8 frei liegen. Nach der in einem Hub und damit schnell ausführbaren Bearbeitung der Kontaktflächen 4 kann nach dem Auseinanderfahren der Schweißelektroden 2 durch den Antrieb der Schweißzange 16 mittels des pneumatischen Antriebs 14 die Bearbeitungsvorrichtung 1 und insbesondere die Platte 38 mit den daran angeordneten Bearbeitungswerkzeugen 8 und den Positionierelementen 7 sowie das keilförmige Stabilisierelement 30 wieder in die Ausgangslage zur Durchführung eines weiteren Arbeitszyklus zurück bewegt werden.

Mit einer derartigen Bearbeitungsvorrichtung 1 kann die Ausführung der Nachbearbeitung der Kontaktflächen 4 der Schweißelektroden 2 wesentlich verbessert und in seiner Güte stabilisiert werden.

### Sachnummernliste

- 1: - Bearbeitungsvorrichtung
- 2: - Schweißelektrode
- 3: - Schweißelemente
- 4: - Kontaktfläche
- 5: - Drehachse Schweißelektrode
- 6: - Antrieb Bearbeitungswerkzeug
- 7: - Positionierungselement
- 8: - Bearbeitungswerkzeug/Fräser
- 9: - Bearbeitungsrichtung
- 10: - Wagen
- 11: - Führung
- 12: - Führungsschuh
- 13: - Profilierung Positionierungselement
- 14: - pneumatischer Antrieb
- 15: - Kolbenstange
- 16: - bügelartiger Schweißelektrodenträger
- 17: - Basisplatte
- 18: - profilierter Zahn Fräser
- 19: - Drehrichtung Fräser
- 20: - Verstellrichtung Positionierungselement
- 21: - Abtragungsdicke
- 22: - Profilierung Zahn Fräser
- 23: - ringartige Wulst
- 24: - Nuten
- 25: - Verstellrichtung Schweißelektroden
- 26: - Winkel
- 27: - Ausnehmung
- 28: - Fase
- 29: - Leiste
- 30: - keilförmiges Stabilisierelement
- 31: - Rahmen
- 32: - Joch
- 33: - Führungsbacke
- 34: - Anlagepunkt Positionierelemente/Kontaktfläche
- 35: - Anlagepunkt Stabilisierelement/Schweißelektrode
- 36: - Einschubrichtung keilförmiges Stabilisierelement
- 37: - Arbeitsbewegung pneumatischer Antrieb/Bearbeitungswerkzeug
- 38: - längsbewegliche Platte

## Patentansprüche

1. Verfahren zur Formgebung und/oder zum mechanischen Entfernen von Ablagerungen an Schweißelektroden (2) für das Widerstandsschweißen, wobei die Schweißelektroden (2) im wesentlichen scheibenförmig mit am Scheibenumfang ausgebildeten, im wesentlichen radial abstehenden Schweißelementen (3) ausgebildet sind und zwei derartige scheibenförmige Schweißelektroden (2) einander gegenüberliegend und die zu verschweißenden Bauteile zumindest abschnittsweise zwischen sich aufnehmend mit den Schweißelementen (3) die zu verschweißenden Bauteile gegeneinander pressen, elektrisch kontaktieren und verschweißen,
**dadurch gekennzeichnet, daß**
die einander gegenüberliegenden Kontaktflächen (4) der Schweißelemente (3) in einer Bearbeitungsvorrichtung (1) definiert voneinander beabstandet an mindestens einem Positionierungselement (7) positioniert werden und durch eine Vorschubbewegung (9) an mindestens einem eine oder gleichzeitig beide Kontaktflächen (4) reinigenden und/oder formgebenden Bearbeitungswerkzeug (8) vorbeigeführt werden.

2. Verfahren gemäß Anspruch 1, **dadurch gekennzeichnet, daß** die Bearbeitungsvorrichtung (1) die notwendigen Bewegungen und Bearbeitungen zur Reinigung und/oder Formgebung der einander gegenüberliegenden Kontaktflächen (4) der Schweißelemente (3) bei im wesentlichen ortsfest angeordneten Schweißelektroden (2) vornimmt.

3. Verfahren gemäß einer der Ansprüche 1 oder 2, **dadurch gekennzeichnet, daß** das Positionierungselement (7) derart zu einem reinigenden und/oder formgebenden Bearbeitungswerkzeug (8) positioniert wird, daß eine Relativbewegung (9) der Schweißelemente (3) zu dem Positionierungselement (7) eine Reinigung und/oder Formgebung der Oberfläche der Kontaktflächen (4) durch das Bearbeitungswerkzeug (8) hervorruft.

4. Verfahren gemäß einem der vorstehenden Ansprüche, **dadurch gekennzeichnet, daß** der Manipulator der Schweißelektroden (2), insbesondere ein Schweißroboter oder dgl., sich mit geöffneten Schweißelektroden (2) in eine die Bearbeitungsvorrichtung (1) aufweisende Bearbeitungsstation hinein bewegt, die Schweißelektroden (2) an dem mindestens einen Positionierungselement (7) anlegt und die Bearbeitungsvorrichtung (1) die notwendigen Bearbeitungsbewegungen (9, 19, 20) ausführt.

5. Verfahren gemäß einem der vorstehenden Ansprüche, **dadurch gekennzeichnet, daß** die Bearbeitungsvorrichtung (1) eine lineare Hinbewegung und eine lineare Rückbewegung (9) ausführt, so daß das Bearbeitungswerkzeug (8) jede Kontaktfläche (4) zweimal bearbeitet und die Kontaktflächen (4) bei der jeweils zweiten Bewegung zusätzlich verbessert, insbesondere zusätzlich glättet.

6. Verfahren gemäß einem der vorstehenden Ansprüche, **dadurch gekennzeichnet, daß** die räumliche Zuordnung zwischen Positionierelement (7) und Bearbeitungswerkzeug (8) und damit der Abtrag der Kontaktfläche (4) verändert wird, insbesondere an den Grad des Vorhandenseins von Ablagerungen oder Formänderungen angepaßt wird.

7. Verfahren gemäß Anspruch 6, **dadurch gekennzeichnet, daß** die räumliche Zuordnung zwischen Positionierelement (7) und Bearbeitungswerkzeug (8) automatisiert an den Grad des Vorhandenseins von Ablagerungen oder Formänderungen angepaßt wird.

8. Verfahren gemäß einem der vorstehenden Ansprüche, **dadurch gekennzeichnet, daß** die beiden Kontaktflächen (4) der einander gegenüberliegenden Schweißelemente (3) getrennt voneinander in einer Anzahl einzelner Vorschubbewegungen (9) nacheinander gereinigt werden.

9. Verfahren gemäß Anspruch 8, **dadurch gekennzeichnet, daß** nur je eine Kontaktfläche (4) an dem Bearbeitungswerkzeug (8) gleichzeitig die Bearbeitung ausführend vorbeibewegt wird und die andere Kontaktfläche (4), ggf. nach Ausführung weiterer Positionierbewegungen relativ zu dem Bearbeitungswerkzeug (8), in einem weiteren Bearbeitungsgang gereinigt wird.

10. Verfahren gemäß einem der Ansprüche 8 oder 9, **dadurch gekennzeichnet, daß** die räumliche Zuordnung von Kontaktfläche (4) und Bearbeitungswerkzeug (8) als automatisch gesteuerte Abfolge einzelner Positionierbewegungen durchgeführt wird.

11. Verfahren gemäß einem der vorstehenden Ansprüche, **dadurch gekennzeichnet, daß** die räumliche Zuordnung von Kontaktfläche (4) und Bearbeitungswerkzeug (8) mechanisch gesteuert durch Anschläge oder dgl. vorgebbare Abfolge einzelner Bewegungen durchgeführt wird.

12. Verfahren gemäß einem der vorstehenden Ansprüche, **dadurch gekennzeichnet, daß** die Drehorientierung (5) der Schweißelektroden (2) und damit die **E**instellung der zu bearbeitenden Schweißelemente (3) bei der Bearbeitung innerhalb der Bearbeitungsstation automatisiert verändert wird.

13. Bearbeitungsvorrichtung (1) zur Formgebung und/oder zum mechanischen Entfernen von Ablagerungen an Schweißelektroden (2) für das Widerstandsschweißen, insbesondere zur Durchführung eines Verfahrens gemäß Anspruch 1, wobei die Schweißelektroden (2) im wesentlichen scheibenförmig mit am Scheibenumfang ausgebildeten, im wesentlichen radial abstehenden Schweißelementen (3) ausgebildet sind und zwei derartige scheibenförmige Schweißelektroden (2) einander gegenüberliegend und die zu verschweißenden Bauteile zumindest abschnittsweise zwischen sich aufnehmend mit den Schweißelementen (3) die zu verschweißenden Bauteile gegeneinander pressen, elektrisch kontaktieren und verschweißen,
**dadurch gekennzeichnet, daß**
die Vorrichtung mindestens ein Positionierungselement (7) für die in Bearbeitungsstellung einander gegenüberliegenden Kontaktflächen (4) der Schweißelemente (3) aufweist und das mindestens eine Positionierungselement (7) an der jeweils zu bearbeitenden Kontaktfläche (4) der Schweißelemente (3) anliegt, diese definiert voneinander beabstandet und relativ zu mindestens einem Bearbeitungswerkzeug (8) positioniert.

14. Bearbeitungsvorrichtung (1) gemäß Anspruch 13, **dadurch gekennzeichnet, daß** das Positionierungselement (7) eine im wesentlichen parallele Führungsschiene für jede der Kontaktflächen (4) aufweist.

15. Bearbeitungsvorrichtung (1) gemäß Anspruch 14, **dadurch gekennzeichnet, daß** die Führungsschiene (7) entsprechend der Profilform der Kontaktflächen (4) profiliert ist und die Kontaktflächen (4) sich zumindest abschnittsweise in die Führungsschiene (7) einlegen.

16. Bearbeitungsvorrichtung (1) gemäß Anspruch 13, **dadurch gekennzeichnet, daß** als Positionierungselement (7) mindestens eine im wesentlichen kreisförmig oder ringförmig ausgebildete Anlagefläche für die in Bearbeitungsstellung einander gegenüberliegenden Kontaktflächen (4) vorgesehen ist.

17. Bearbeitungsvorrichtung (1) gemäß Anspruch 16, **dadurch gekennzeichnet, daß** zwei symmetrisch angeordnete Positionierungselemente (7) für jede der in Bearbeitungsstellung einander gegenüberliegenden Kontaktflächen (4) der zu bearbeitenden Schweißelektroden (2) vorgesehen ist.

18. Bearbeitungsvorrichtung (1) gemäß einem der Ansprüche 13 bis 17, **dadurch gekennzeichnet, daß** das Bearbeitungswerkzeug (8) ein entsprechend der Profilform der Schweißelemente (3) profilierter Fräser (8) ist.

19. Bearbeitungsvorrichtung (1) gemäß Anspruch 18, **dadurch gekennzeichnet, daß** der Fräser (8) ein am Umfang schneidender Formfräser ist, dessen Rotationsachse (19) im wesentlichen parallel zur Mittelachse (5) der scheibenförmigen Schweißelektroden (2) verläuft.

20. Bearbeitungsvorrichtung (1) gemäß Anspruch 19, **dadurch gekennzeichnet, daß** der Fräser (8) mindestens eine entsprechend der Profilform der Schweißelemente (3) angeordnete Wechselschneidplatte aufweist.

21. Bearbeitungsvorrichtung (1) gemäß Anspruch 18, **dadurch gekennzeichnet, daß** der Fräser (8) ein am Umfang schneidender Scheibenfräser ist, dessen Rotationsachse im wesentlichen senkrecht zur Mittelachse (5) der scheibenförmigen Schweißelektroden (2) verläuft.

22. Bearbeitungsvorrichtung (1) gemäß einem der Ansprüche 13 bis 17, **dadurch gekennzeichnet, daß** das Bearbeitungswerkzeug (8) ein entsprechend der Profilform der Schweißelemente (3) profiliertes Polierwerkzeug oder dgl., insbesondere ein Polierwerkzeug mit rotierender Polierfläche ist.

23. Bearbeitungsvorrichtung (1) gemäß einem der Ansprüche 13 bis 17, **dadurch gekennzeichnet, daß** das Bearbeitungswerkzeug (8) ein entsprechend der Profilform der Schweißelemente (3) profiliertes, feilenartiges Werkzeug mit linearer Arbeitsbewegung ist.

24. Bearbeitungsvorrichtung (1) gemäß einem der Ansprüche 13 bis 23, **dadurch gekennzeichnet, daß** die Kontaktflächen (4) der Schweißelemente (3) eben ausgebildet sind.

25. Bearbeitungsvorrichtung (1) gemäß einem der Ansprüche 13 bis 24, **dadurch gekennzeichnet, daß** mehr als ein Bearbeitungswerkzeug (8), insbesondere ein Bearbeitungswerkzeug (8) für jede der Kontaktflächen (4) vorgesehen sind.

26. Bearbeitungsvorrichtung (1) gemäß Anspruch 25, **dadurch gekennzeichnet, daß** die mehreren Bearbeitungswerkzeuge (8) hinsichtlich Ihrer Bewegungsrichtung (19) unterschiedliche Bewegungen, insbesondere Rotationsbewegungen unterschiedlicher Drehrichtungen (19) ausführen.

27. Bearbeitungsvorrichtung (1) gemäß einem der Ansprüche 13 bis 26, **dadurch gekennzeichnet, daß** der Antrieb der Bearbeitungsvorrichtung (1) für die lineare Hinbewegung und/oder die lineare Rückbewegung (9) pneumatisch, hydraulisch oder elektrisch ausgebildet ist.

28. Bearbeitungsvorrichtung (1) gemäß einem der Ansprüche 13 bis 27, **dadurch gekennzeichnet, daß** der Antrieb (6) des oder der Bearbeitungswerkzeuge (8) für die Bearbeitung der Kontaktflächen (4) pneumatisch, hydraulisch oder elektrisch erfolgt.

29. Bearbeitungsvorrichtung (1) gemäß einem der Ansprüche 13 bis 28, **dadurch gekennzeichnet, daß** das Positionierelement (7) auf einem schlittenartig längsverschieblichen Wagen (10) angeordnet ist, der die an dem mindestens einen Positionierelement (7) ortsfest positionierten Schweißelektroden (2) an dem mit dem Wagen (10) verschieblichen Bearbeitungswerkzeug (8) vorbei bewegt.

30. Bearbeitungsvorrichtung (1) gemäß einem der Ansprüche 13 bis 29, **dadurch gekennzeichnet, daß** das Bearbeitungswerkzeug (8) derart innerhalb des Positionierungselementes (7) angeordnet ist, daß das Bearbeitungswerkzeug (8) ein- oder beidseitig mit einem definierten Maß gegenüber dem Positionierungselement (7) in die Bahn der Kontaktflächen (4) der Schweißelemente (3) hervorragt.

31. Bearbeitungsvorrichtung (1) gemäß Anspruch 30, **dadurch gekennzeichnet, daß** eine Relativverstellung zwischen Bearbeitungswerkzeug (8) und Positionierelement (7) mittels Exzenterverstellung durchführbar ist.

32. Bearbeitungsvorrichtung (1) gemäß einem der Ansprüche 13 bis 31, **dadurch gekennzeichnet, daß** ein im wesentlichen keilförmiges Stabilisierelement derart zwischen den sich in Bearbeitungsstellung gegenüberliegenden und gegeneinander gepressten Schweißelementen angeordnet ist, dass die Lage der Kontaktflächen der Schweißelemente während der Bearbeitung durch das mindestens eine Bearbeitungswerkzeug relativ zu dem Bearbeitungswerkzeug konstant gehalten wird.

33. Bearbeitungsvorrichtung (1) gemäß Anspruch 32, **dadurch gekennzeichnet, daß** das keilförmige Stabilisierelement derart zwischen die sich in Bearbeitungsstellung gegenüberliegenden Schweißelektroden einschiebbar ist, dass das keilförmige Stabilisierelement an in ihrem Durchmesser unveränderlich bleibenden Umfangsabschnitten der Schweißelektroden anliegt und die Schweißelektroden damit unabhängig von dem jeweiligen Maß der zu bearbeitenden Kontaktflächen eine stabilisierende Anlagefläche für die Schweißelektroden gegenüber einer von außen wirkenden Klemmung der Schweißelektroden in ihrer jeweiligen Bearbeitungsstellung bilden.

34. Bearbeitungsvorrichtung (1) gemäß einem der Ansprüche 32 bis 33, **dadurch gekennzeichnet, daß** das keilförmige Stabilisierelement nach dem Positionieren der Schweißelemente mittels Anlage des mindestens einen Positionierelementes an den Kontaktflächen solange linear zwischen die korrespondierenden Anlagenflächen der Schweißelektroden einschiebbar ist, bis die Keilflächen des keilförmigen Stabilisierelementes an den in ihrem Durchmesser unveränderlich bleibenden Umfangsabschnitten der Schweißelektroden anliegen.

35. Bearbeitungsvorrichtung (1) gemäß einem der Ansprüche 32 bis 34, **dadurch gekennzeichnet, daß** ein Antrieb das keilförmige Stabilisierelement entlang einer linearen Führung zwischen die korrespondierenden Anlagenflächen der Schweißelektroden einschiebt.

36. Bearbeitungsvorrichtung (1) gemäß Anspruch 35, **dadurch gekennzeichnet, daß** der Antrieb für das keilförmige Stabilisierelement nach dem Einschieben des keilförmigen Stabilisierelementes auch die Vorschubbewegung des mindestens einen Bearbeitungswerkzeuges ausführt.
